# EUROPEAN PATENT APPLICATION

(11) **EP 4 722 920 A1**
(43) Date of publication of application: **08.04.2026**
(21) Application number: 25206568.5
(22) Date of filing: 03.10.2025
(51) Int. Cl.: G06F 11/10

(54) **REDUCING DRAM UTILIZATION FOR ERROR CORRECTION CODES WHILE MAINTAINING ERROR DETECTION AND CORRECTION**

(30) Priority: 07.10.2024 US 202418908200
(71) Applicant: Google LLC, Mountain View, CA 94043 (US)
(72) Inventor: Aidan, Fabrice, 6789141 Tel Aviv (IL); Mulla, Amir, 6789141 Tel Aviv (IL)
(74) Representative: Betten & Resch

(57) **Abstract**

The technology is directed to error detection and correction in a memory device containing dynamic random-access memory (DRAM) elements. The DRAM elements are configured to store data in a first number of elements, store error correction code (ECC) information in a second number of elements and storing an error correction code in a third number of elements. The amount of memory allocated to ECC is reduced without adversely affecting the ECC capability by storing an error correction code, such as a cyclic redundancy code (CRC) in the freed-up memory space. A location of an uncorrectable error is identified assuming one of the elements contains an error then recalculating the selected data using the ECC, recalculating the CRC and comparing it to the original CRC. A match indicates the faulty value has been found and corrected. A mismatch indicates that the selected element is not the location of the error.

## Description

### BACKGROUND

Day-to-day operations of enterprise organizations may generate large amounts of data, often stored in computing environments offered via the cloud (e.g., networks of servers, storage, databases, software, and other services made available by cloud platform providers). Cloud services may be hosted in various data centers located in different geographic locations. Each data center may house computing resources and networking equipment configured to receive, process, store the data transmitted to the data center, and/or transmit processed data to end user devices or other data centers.

Data centers may use dynamic random access memory devices (DRAM devices) to receive, process, store, and/or transmit data. The DRAM devices may be critical to the operations and/or functions of the data centers and, consequently, the longevity and reliability of the DRAM devices may be of tantamount importance. However, DRAM devices may be vulnerable to faults that may cause data or symbol errors when reading data from and/or writing data to the DRAM device. Faults may occur because of underlying hardware defects within the DRAM device. Faults, in some instances, may compromise the functionality and life cycle of the impacted DRAM device and, ultimately, a memory device such as a Dual Inline Memory Module (DIMM) that includes the impacted DRAM device. In particular, a fault may compromise how the DRAM device receives, processes, reads, writes, and/or stores the data. In some instances, faults may lead to hardware failure, software system crashes, or the like.

Current solutions to identify and correct faults may use symbol-led error correction schemes (e.g., Reed-Solomon (RS) code, array codes, or the like) to detect and correct errors caused by such faults when they are detected as a result of a DRAM memory read transaction. For example, error correction code (ECC) symbols may be added to the DRAM device (e.g., by a memory controller) to detect and correct memory errors on the DRAM device. ECC symbols may be used to correct memory errors caused by faulty I/O data pins (DQs). A portion of available DRAM device storage may be used to store the ECC symbols on the DRAM device. Therefore, a size of the DRAM device and a number of bytes used to store the ECC symbols may impact the capacity of the ECC to detect and correct multiple memory errors.

Errors may be categorized as one of either a correctable error (CE) or an uncorrectable error (UE). A CE may be detected and corrected using ECC symbols stored within the DRAM device. Alternatively, when a UE is detected, it might not be correctable. An error may be considered uncorrectable if the number of available ECC symbols is insufficient (e.g., when the number of detected errors exceeds the number of ECC symbols available within the DRAM device). Therefore, current solutions for detecting and correcting faults that may lead to memory errors might not permit DRAM devices to correct a total number of UEs using the ECC.

The ECC information is added to the DRAM by a memory controller. Typically, Reed-Solomon (RS) codes are used as ECC. For example, for a generation DDR5 memory device (e.g., 10x4 DIMM), the following RS code may be used: RS(40,32,8), which denotes:
- 8 bytes per symbol;
- 32 data symbols
- 8 ECC symbols

This code has the capability to detect and correct up to 4 symbol errors with a probability of 100 percent accuracy. This scenario is referred to as correctable error (CE). However, if 5 or more symbol errors occur, the code will be able to detect that the errors exist but will not be able to correct them. This is referred to as uncorrectable error (UE).

The ability to detect and correct errors in DRAM can extend the life of faulty DRAM while continuing to provide good ECC error detection and correction to detect additional possible faults.

For a number N ECC symbols, conventional ECC can correct up to N/2 symbol errors. The ability to provide correction for a greater number of errors would be desirable.

### SUMMARY

The described technology relates to a method of detecting and correcting errors in a memory device having a plurality of elements. The technology includes storing data values in a first portion of the elements of the memory device and storing error correction code (ECC) information in a second portion of the elements of the memory device and an error correction code in a third portion of the elements of the memory device. A location of a fault in one of the elements of the memory device is determined and the fault corrected using the ECC information in the identified fault location. Metadata associated with the stored data values is used to determine the location of the faults. The metadata may include memory tagging extension (MTE) information. Correcting a chip-kill fault condition in the memory device may be performed based on the identified location of the fault and the stored ECC information. The memory device may be a 10 x 4 dual inline memory module (DIMM). The data values may be stored in eight memory elements of the 10 x 4 DIMM, the ECC information can be stored in one other element of the 10 x 4 DIMM, and the error detection code can be stored in the remaining one other element of the 10 x 4 DIMM. Each memory element of the 10 x 4 DIMM stores 8 bytes of data. The error correction code can be stored in two bytes of the remaining one other element of the 10 x 4 DIMM and the metadata associated with the stored data values a remaining 6 bytes of the remaining one other element of the 10 x 4 DIMM. Detecting the location of the fault in one of the memory elements includes selecting one of the memory elements of the memory device, assuming a fault exists in the selected one of the memory elements then using the ECC information to retrieve the data value in the selected one of the memory elements. Using the ECC information the error correction code is recalculated based on the retrieved data value. The recalculated error correction code is compared with the error correction code originally stored on the memory device. For each memory element of the plurality of memory elements it is assumed that a fault exists in the selected memory element. The ECC information is used to retrieve the data value in the selected memory elements. The error correction code is recalculated based on the reconstructed data value. The recalculated error detection code is compared to the error correction code stored on the memory device. Based on the comparison, the selected memory element is flagged as not containing the fault if the recalculated error detection code is equal to the stored error detection code. Alternatively, the selected memory element is flagged as containing the fault if the recalculated error detection code is not equal to the stored error detection code. In a memory element identified as the location of a fault the data is replaced in the memory element with the retrieved value created with the ECC information. The error correction code can be a cyclic redundancy check (CRC).

A memory device according to the described technology includes a plurality of memory elements for storing information. A first portion of the plurality of memory elements stores data read for storage in the memory device. A second portion of the plurality of memory elements stores error correction code (ECC) information. A third portion of the plurality of memory elements stores error correction code information. A location of a fault in one of the memory elements is detectable using the data stored in the first portion of memory elements, the ECC information stored in the second portion of memory elements, and the error detection code stored in the third portion of memory elements. Detecting the location of the fault in the memory element in a selected memory element of the plurality of memory elements is achieved by recreating a data value of the selected memory element using the ECC information, recalculating an error detection code based on the recreated data value, and comparing the recalculated error detection code to the error detection code stored in the third portion of the plurality of memory elements. Detecting the location of the fault in the memory element further comprises sequentially selecting each memory element in plurality of memory elements and recreating a data value of the selected memory element using the ECC information, recalculating an error detection code based on the recreated data value, and comparing the recalculated error detection code to the error detection code stored in the third portion of the plurality of memory elements. Based on the comparison of recalculated error detection code to the error detection code stored in the third portion of the plurality of memory elements, the selected memory element is flagged as containing the fault when the calculated error detection code is equal to the error correction code stored in the third portion of the memory elements. The selected memory element is flagged as not containing the fault when the calculated error detection code does not equal the error detection code stored in the third portion of the plurality of memory elements. The memory device can be configured as a 10 x 4 dual inline memory module (DIMM). The 10 x 4 DIMM stores the data values in a first eight memory elements of the 10 x 4 DIMM, the ECC information is stored in a one of the remaining memory elements, and the error detection code is stored in the remaining one memory element of the 10 x 4 DIMM.

### BRIEF DESCRIPTION OF THE DRAWINGS

FIG. 1 is an illustration of a memory device storage configuration according to aspects of the disclosed technology.
FIG. 2 illustrates ECC error detection in a memory device according to aspects of the disclosed technology.
FIG. 3 is an illustration of error detection and correction in a memory device according to aspects of the disclosed technology.
FIG. 4 is a process flow diagram for detection and correction of errors in a memory device according to aspects of the disclosed technology.
FIG. 5 is a block diagram of an example system according to aspects of the disclosure.

### DETAILED DESCRIPTION

The technology is generally directed to the detection and correction of errors in memory devices. ECCs are used to detect and correct errors subject to the amount of ECC information that is available. ECC information requires memory space, thus affecting the amount of memory remaining for data storage. The described techniques and devices allow for less ECC information to be stored, freeing up space for storing additional information such as metadata in the saved space while not impacting the detection and correction capabilities of the original larger ECC.

Moreover, the technology is directed to error detection and correction in a memory device containing DRAM elements. The DRAM elements are configured to store data in a first number of elements, store ECC information in a second number of elements and storing an error correction code in a third number of elements. The amount of memory allocated to ECC is reduced without adversely affecting the ECC capability by storing an error correction code, such as a CRC in the freed-up memory space. A location of an uncorrectable error is identified assuming one of the elements contains an error then recalculating the selected data using the ECC, recalculating the CRC and comparing it to the original CRC. A match indicates the faulty value has been found and corrected. A mismatch indicates that the selected element is not the location of the error.

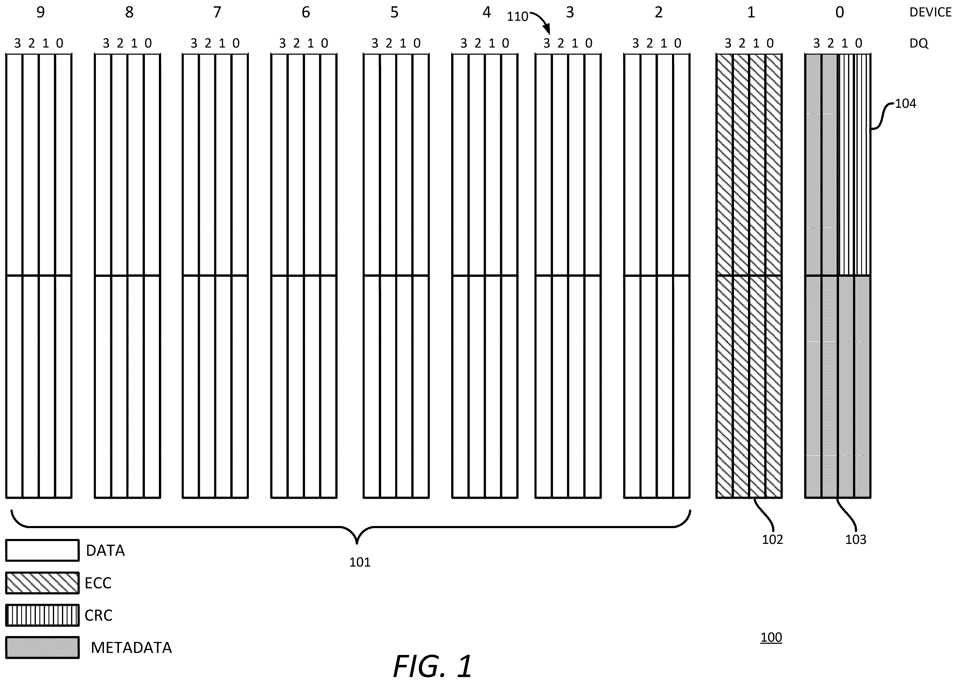

FIG. 1 illustrates a memory device 100 configured to store information according to aspects of the disclosed technology. In the example of FIG. 1, the memory device 100 includes ten memory elements denoted device 0-9. Each memory element has four leads (DQs) for communicating data 110. Each memory element includes storage for 8 bytes of data. Device 2 - device 9 101 are configured for storing data. Memory element device 1 102 is configured to store ECC information for error detection and correction. The remaining eight bytes in memory element device 0 are divided between provision of two bytes of data for an error detection code 104, such as a cyclic redundancy check (CRC) and the remaining six bytes of memory element 0 configured for storing additional information 103. According to one example, the additional information is metadata. Metadata may include memory tagging extension (MTE) information or other information.

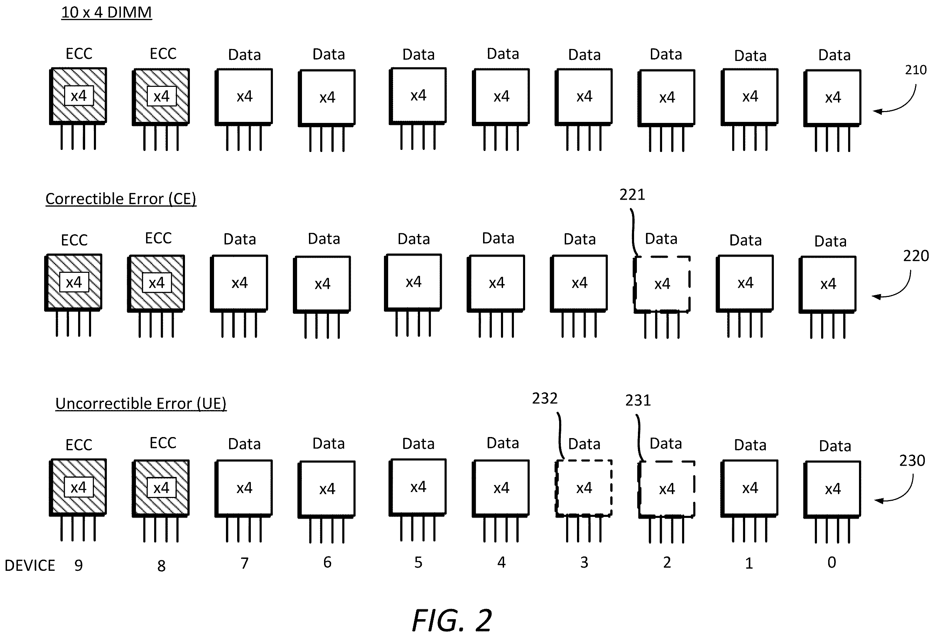

FIG. 2 illustrates the detection and correction of errors using ECC according to aspects of the disclosed technology. The example in FIG. 2 illustrates a 10 x 4 memory device, including ten memory devices 0-9 each memory device having four DQs. Conventionally, the memory device is configured to store data in eight of the memory devices 0-7, and store ECC information in the remaining two memory devices 8-9, shown in example 210.

Memory device elements are subject to failures that cause data errors when the data is attempted to be read from the memory device. When a random error occurs in a single memory device 221, the error depicted 220 can be corrected by the ECC information stored in device 8 and device 9. ECC techniques such as Reed Solomon codes are capable of detecting and correcting errors that affect DQ pins that number half or less of the number of leads configured for ECC. In the example of FIG. 2 220, the error 221 involving four DQs can be detected and corrected when eight DQs are reserved for ECC. However, if the random errors exceed half of the DQs for ECC, then the error is considered uncorrectable. As shown in example 230, errors 231, 232 occur in two memory devices, exceeding the four DQ limit. In this case the errors are unable to be detected and corrected. FIG. 2 illustrates that when eight DQs are provided for ECC, ECC will consume 16 bytes of output, while provided detection and correction of errors affecting up to four DQs.

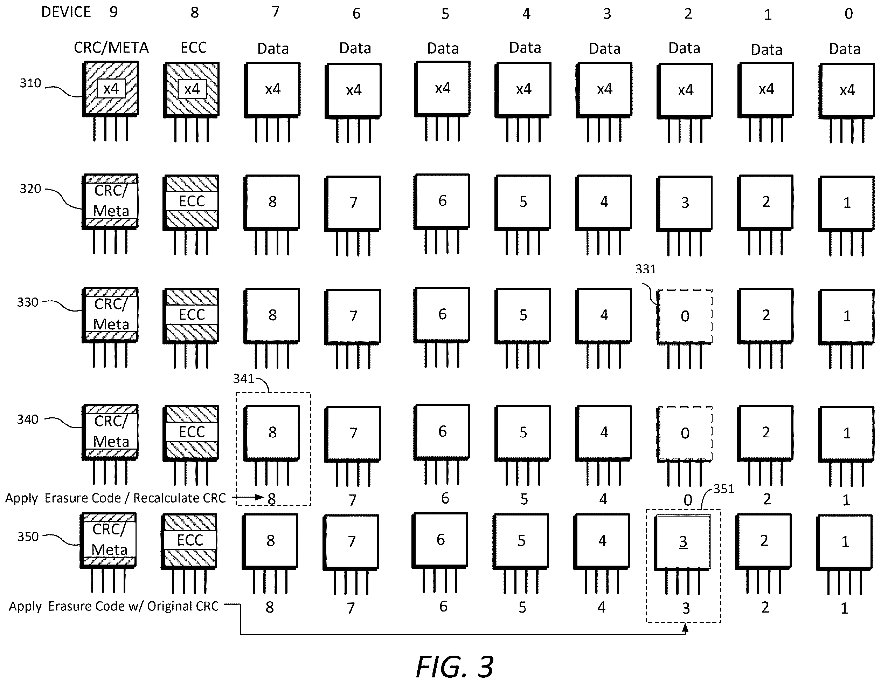

FIG. 3 is an illustration of a memory device, like the memory device depicted in FIG. 2, where the memory is configured as the memory device shown in FIG. 1 according to aspects of the disclosed technology. The configuration of the memory device 310 provides data storage in eight of the memory elements 0-7. Memory element 8 stores ECC information. The final memory element 9 is configured to store CRC information and additional metadata.

Data is then written to the memory device 320. The values 1-8 are written to the data memory elements 0-7, respectively. When an error occurs 330, one or more of the values stored are corrupted. In this example, the value "3" that was written to memory device 2 is corrupted and stored as the value "0" 331. When the error is detected, the following process is used to determine the location of the error. When the location of an error is unknown (random error), the ECC is capable of correcting a number of DQ errors equal to half of the number of DQs for ECC (nECC/2). When the location is known, ECC can correct up to nECC DQ errors. In this example, nECC is equal to four. Accordingly, if the location of the error is known, then up to four DQ errors can be detected and corrected.

The procedure for finding the location of the error includes applying the erasure code to each memory element. This may be performed iteratively or in parallel where the memory controller applies the erasure code to regenerate the value stored in the selected memory element according to the ECC written to memory when the data was written. When the data was written, a CRC value was calculated based on the data and ECC being saved. During the error analysis, a recalculated CRC value is calculated from the newly recreated data value. The recalculated CRC is compared to the original CRC written to the memory device. If the CRC data matches, it indicates that the erasure applied successfully corrected the error, and the currently stored data is correct. This is shown in example 350, where device 2 is selected for analysis. The erasure code is applied to device 2, recreating the value "3". This is the proper correction resulting in a CRC recalculation that matches the original CRC calculated when the data was written. Thus, it may be assumed that the error has been detected and corrected and the recalculated value is written to the affected memory element. However, if the recalculated CRC does not match the originally stored CRC, it indicates that the data in the memory device still contains an error, and the erasure applied did not provide corrected data. This indicates that the selected location does not contain the error. This is shown in the example 340 where device 7 341 is selected for analysis. The ECC is used to apply erasure code to device 7 containing the value "8". As no error exists at this location, the ECC regenerates the value "8". Next the CRC is recalculated. When recalculated, the CRC is based in part on the erroneous value at device 2. Accordingly, the recalculated CRC value does not match the originally calculated CRC value. In this case, the CRC mismatch indicates that the erasure code analysis did not find the correct location of the error.

As shown in the example of FIG. 3 as compared to the configuration of FIG. 2, the amount of memory space allocated to ECC is reduced from eight DQs in FIG. 2 to four DQs in FIG. 3. The example of FIG. 3 uses the conserved space to store a CRC value, with the residual space in memory element 9 being utilized for storage of metadata, such as MTE data. As in the example of FIG. 2 the memory device shown in FIG. 3 is capable of correcting up to four faulty DQs. Thus, the error detection and correction ability has not been adversely affected. Despite the same capability, space has been freed up for use by other data, including the CRC information used to assist in error detection, and additional metadata information such as MTE data or other data considered valuable.

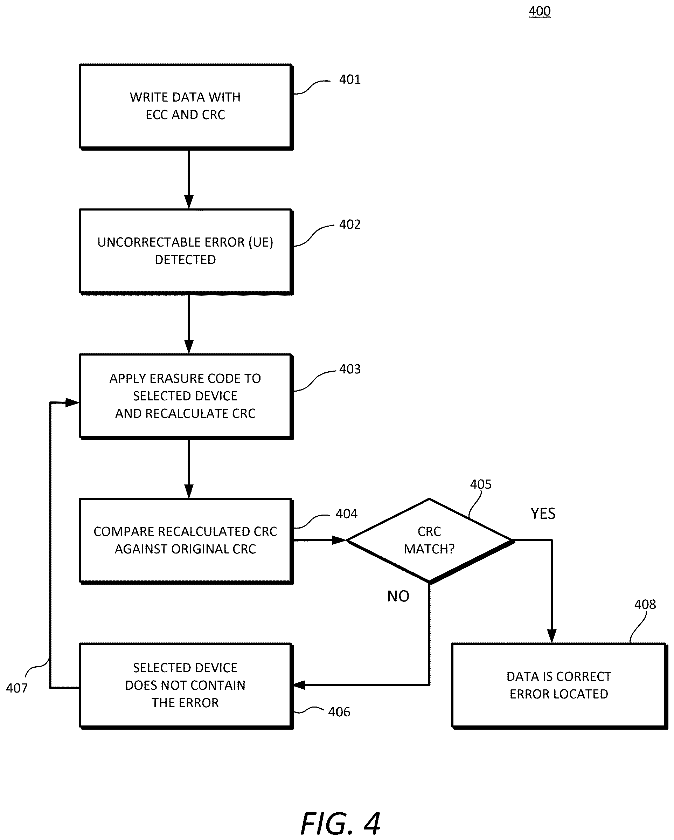

FIG. 4 depicts a process for detecting and correcting errors in a memory device 400 according to aspects of the disclosed technology. When data is originally written to the memory device, ECC information and a CRC value is written to memory along with the data 401. At some point, an error may be detected 402. The error may be result of a faulty memory element. When the error is detected, the system selects each of the memory elements and applies the erasure code to the selected element. The CRC is recalculated based on the reconstructed data value 403. The analysis of each memory element may be performed by the memory controller in parallel. The recalculated CRC value 403 is compared 404 to the CRC value originally calculated 401. Based on the comparison, it is determined if the recalculated CRC value matches the original CRC value 405. If the CRC values match, then the correct error location is determined, and the recalculated data value is accepted as the correct value. If the recalculated CRC value does not match the originally calculated CRC value, the selected device or element does not contain the detected error 406. The next memory element is analyzed to check the next memory element location for the detected error 407. Multiple memory elements may be analyzed in parallel for rapid identification of the error location. When the analysis results in match between the original CRC and the recalculated CRC 405, then the location of the error has been located, and the recreated value is accepted as correct 408.a

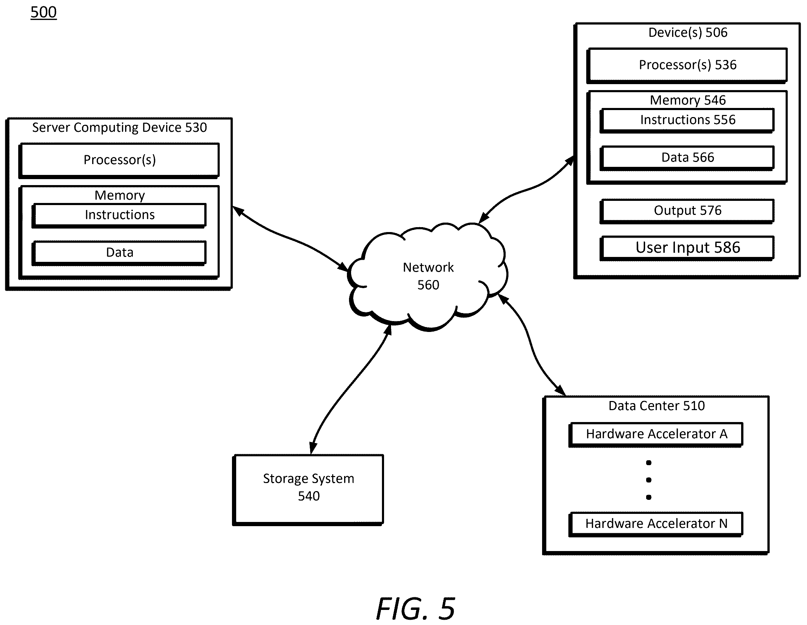

FIG. 5 illustrates an example system 500 in which the features described above may be implemented. It should not be considered limiting the scope of the disclosure or usefulness of the features described herein. In this example, system 500 may include device(s) 506, server computing device 530, storage system 540, and network 560.

Each device 506 may be a personal computing device intended for use by a respective user. The device 506 may include one or more processors 536, memory 546, data 566 and instructions 556. Each device 606 may also include an output 576, user input 566, and location sensor 596. By way of example only, devices 506 may be mobile phones or devices such as a wireless-enabled PDA, smartphones, a tablet PC, a wearable computing device (e.g., a smartwatch, AR/VR headset, smart helmet, etc.), a netbook that is capable of obtaining information via the Internet or other networks, or a smart home device, such as a home assistant, smart thermostat, smart doorbell, smart light, etc.

Memory 546 of device 506 may store information that is accessible by processor 536. Memory 546 may also include data that can be retrieved, manipulated or stored by the processor 536. The memory 546 may be of any non-transitory type capable of storing information accessible by the processor 536, including a non-transitory computer-readable medium, or other medium that stores data that may be read with the aid of an electronic device, such as a hard-drive, memory card, read-only memory ("ROM"), random access memory ("RAM"), optical disks, as well as other write-capable and read-only memories. Memory 546 may store information that is accessible by the processors 536, including instructions 556 that may be executed by processors 536, and data 566.

Data 566 may be retrieved, stored or modified by processors 536 in accordance with instructions 556. For instance, although the present disclosure is not limited by a particular data structure, the data 566 may be stored in computer registers, in a relational database as a table having a plurality of different fields and records, XML documents, or flat files. The data 566 may also be formatted in a computer-readable format such as, but not limited to, binary values, ASCII or Unicode. By further way of example only, the data 566 may comprise information sufficient to identify the relevant information, such as numbers, descriptive text, proprietary codes, pointers, references to data stored in other memories (including other network locations) or information that is used by a function to calculate the relevant data.

The instructions 556 can be any set of instructions to be executed directly, such as machine code, or indirectly, such as scripts, by the processor 536. In that regard, the terms "instructions," "application," "steps," and "programs" can be used interchangeably herein. The instructions can be stored in object code format for direct processing by the processor, or in any other computing device language including scripts or collections of independent source code modules that are interpreted on demand or compiled in advance. Functions, methods and routines of the instructions are explained in more detail below.

The one or more processors 536 may include any conventional processors, such as a commercially available CPU or microprocessor. Alternatively, the processor can be a dedicated component such as an ASIC or other hardware-based processor. Although not necessary, computing devices 506 may include specialized hardware components to perform specific computing functions faster or more efficiently.

Although FIG. 5 functionally illustrates the processor, memory, and other elements of devices 506 as being within the same respective blocks, it will be understood by those of ordinary skill in the art that the processor or memory may actually include multiple processors or memories that may or may not be stored within the same physical housing. Similarly, the memory may be a hard drive or other storage media located in a housing different from that of the devices 506. Accordingly, references to a processor or device will be understood to include references to a collection of processors or devices or memories that may or may not operate in parallel.

Output 576 may be a display, such as a monitor having a screen, a touchscreen, a projector, or a television. The display 576 of the one or more computing devices 506 may electronically display information to a user via a graphical user interface ("GUI") or other types of user interfaces. For example, as will be discussed below, display 576 may electronically display query results.

The user input 566 may be a mouse, keyboard, touch-screen, microphone, or any other type of input.

The devices 506 can be at various nodes of a network 560 and capable of directly and indirectly communicating with other nodes of network 560. Although one device is depicted in FIG. 5, it should be appreciated that a typical system can include one or more devices, with each device being at a different node of network 560. The network 560 and intervening nodes described herein can be interconnected using various protocols and systems, such that the network can be part of the Internet, World Wide Web, specific intranets, wide area networks, or local networks. The network 560 can utilize standard communications protocols, such as WiFi, Bluetooth, 4G, 5G, etc., that are proprietary to one or more companies. Although certain advantages are obtained when information is transmitted or received as noted above, other aspects of the subject matter described herein are not limited to any particular manner of transmission.

In one example, system 500 may include one or more server computing devices 530 having a plurality of computing devices, e.g., a load balanced server farm, that exchange information with different nodes of a network for the purpose of receiving, processing and transmitting the data to and from other computing devices. For instance, one or more server computing devices 530 may be a web server that is capable of communicating with the one or more client computing devices 506 via the network 560. In addition, server computing device 530 may use network 560 to transmit and present information to a user of one of the other computing devices 506.

Server computing device 530 may include one or more processors, memory, instructions, data, etc. These components operate in the same or similar fashion as those described above with respect to computing device 506.

According to some examples, the server computing device 530 may be connected over the network to a data center 510 housing any number of hardware accelerators. The data center 510 can be one of multiple data centers or other facilities in which various types of computing devices, such as hardware accelerators, are located. Computing resources housed in the data center can be specified for repeated results monitoring, including identifying repeated query results, or the like.

The server computing device 530 can be configured to receive queries from the client computing device 506 on computing resources in the data center 510. For example, the environment can be part of a computing platform configured to provide a variety of services to users, through various user interfaces and/or application programming interfaces (APIs) exposing the platform services. The variety of services can include identifying content responsive to the query, determining whether query results are repeated query results, or the like. The client computing device 506 can transmit input data associated with a query. The server computing device 530 can receive the input data and, in response, identify and provide for output query results. When identifying the query results, the server computing device 530 can generate a signature for the query results. The generated signature may be compared to other signatures associated with the query results and/or historical query signatures. Based on the comparison, the server computing device 530 can determine whether the query results are repeated query results. In examples where the query results are repeated query results, the server computing device 530 can enable one or more preventative measures.

As other examples of potential services provided by a platform implementing the environment, the server computing device can maintain a variety of models in accordance with different constraints available at the data center. For example, the server computing device can maintain different families for deploying models on various types of TPUs and/or GPUs housed in the data center or otherwise available for processing.

Aspects of this disclosure can be implemented in digital electronic circuitry, in tangibly embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, that is generated to encode information for transmission to suitable receiver apparatus for execution by a data processing apparatus.

The term "configured" is used herein in connection with systems and computer program components. For a system of one or more computers to be configured to perform particular operations or actions means that the system has installed on its software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

The term "data processing apparatus" refers to data processing hardware and encompasses various apparatus, devices, and machines for processing data, including programmable processors, a computer, or combinations thereof. The data processing apparatus can include special purpose logic circuitry, such as a field programmable gate array (FPGA) or an application specific integrated circuit (ASIC). The data processing apparatus can include code that creates an execution environment for computer programs, such as code that constitutes processor firmware, a protocol stack, a database management system, an operating system, or combinations thereof.

The data processing apparatus can include special-purpose hardware accelerator units for implementing machine learning models to process common and compute-intensive parts of machine learning training or production, such as inference or workloads. Machine learning models can be implemented and deployed using one or more machine learning frameworks.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a stand-alone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" refers to a software-based system, subsystem, or process that is programmed to perform one or more specific functions. The engine can be implemented as one or more software modules or components or can be installed on one or more computers in one or more locations. A particular engine can have one or more computers dedicated thereto, or multiple engines can be installed and running on the same computer or computers.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

A computer or special purposes logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back-end component, e.g., as a data server, a middleware component, e.g., an application server, or a front-end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The computing system can include clients and servers. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the examples should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A method of detecting and correcting errors in a memory device having a plurality of elements comprising:
storing data values in a first portion of the elements of the memory device;
storing error correction code (ECC) information in a second portion of the elements of the memory device;
storing error detection code in a third portion of the elements of the memory device;
identifying a location of a fault in one of the elements of the memory device; and
correcting the fault using the ECC information in the identified fault location.

2. The method of claim 1, further comprising:
storing in the third portion of the elements of the memory device, metadata associated with the stored data values; and
wherein the metadata optionally comprises memory tagging extension (MTE) information.

3. The method of claim 1 or claim 2, further comprising:
correcting a chip-kill fault condition in the memory device based on the identified location of the fault and the stored ECC information.

4. The method of claim 2 or claim 3, wherein the memory device is a 10 x 4 dual inline memory module (DIMM); and
wherein the method further optionally comprises:
storing the data values in eight memory elements of the 10 x 4 DIMM;
storing the ECC information in one other element of the 10 x 4 DIMM; and
storing the error detection code in the remaining one other element of the 10 x 4 DIMM.

5. The method of claim 4, wherein a memory element of the 10 x 4 DIMM stores 8 bytes of data; and
wherein the method optionally further comprises:
storing the error detection code in two bytes of the remaining one other element of the 10 x 4 DIMM; and
storing the metadata associated with the stored data values a remaining 6 bytes of the remaining one other element of the 10 x 4 DIMM.

6. The method of any one of claims 1 to 5, wherein detecting the location of the fault in one of the memory elements comprises:
selecting one of the memory elements of the memory device;
assuming a fault exists in the selected one of the memory elements;
using the ECC information, retrieving the data value in the selected one of the memory elements;
recalculating the error detection code based on the retrieved data value; and
comparing the recalculated error code with the error detection code stored on the memory device.

7. The method of claim 6, further comprising:
iteratively selecting each memory element of the plurality of memory elements;
assuming a fault exists in the selected memory elements;
using the ECC information, retrieving the data value in the selected memory elements;
recalculating the error detection code based on the retrieved data value; and
comparing the recalculated error detection code with the error detection code stored on the memory device.

8. The method of claim 7, further comprising:
based on the comparison of the recalculated error detection code with the stored error detection code:
flagging the selected memory element as not containing the fault if the recalculated error detection code is equal to the stored error detection code; and
flagging the selected memory element as containing the fault if the recalculated error detection code is not equal to the stored error detection code; and
wherein the method optionally further comprises:
in a memory element identified as the location of a fault, replacing the data in the memory element with the retrieved value created with the ECC information.

9. The method of any one of claims 1 to 8, wherein the error detection code is a cyclic redundancy check (CRC).

10. A memory device comprising:
a plurality of memory elements for storing information;
a first portion of the plurality of memory elements storing data read for storage in the memory device;
a second portion of the plurality of memory elements storing error correction code (ECC) information; and
a third portion of the plurality of memory elements storing error correction code information.

11. The memory device of claim 10, wherein a location of a fault in one of the memory elements is detectable using the data stored in the first portion of memory elements, the ECC information stored in the second portion of memory elements, and the error detection code stored in the third portion of memory elements.

12. The memory device of claim 11, wherein detecting the location of the fault in the memory element comprises:
in a selected memory element of the plurality of memory elements, recreating a data value of the selected memory element using the ECC information;
recalculating an error detection code based on the recreated data value; and
comparing the recalculated error detection code to the error detection code stored in the third portion of the plurality of memory elements.

13. The memory device of claim 12, wherein detecting the location of the fault in the memory element further comprises:
iteratively selecting each memory element in plurality of memory elements;
recreating a data value of the selected memory element using the ECC information;
recalculating an error detection code based on the recreated data value; and
comparing the recalculated error detection code to the error detection code stored in the third portion of the plurality of memory elements.

14. The memory device of claim 13, wherein detecting the location of the fault in the memory element further comprises:
based on the comparison of recalculated error detection code to the error detection code stored in the third portion of the plurality of memory elements:
flagging the selected memory element as containing the fault when the calculated error detection code is equal to the error correction code stored in the third portion of the memory elements; and
flagging the selected memory element as not containing the fault when the calculated error detection code does not equal the error detection code stored in the third portion of the plurality of memory elements.

15. The memory device of claim 14, wherein the memory device is configured as a 10 x 4 dual inline memory module (DIMM); and
wherein optionally the 10 x 4 DIMM stores the data values in a first eight memory elements of the 10 x 4 DIMM, stores the ECC information in a one of the remaining memory elements, and stores the error detection code in the remaining one memory element of the 10 x 4 DIMM.
